# EUROPEAN PATENT SPECIFICATION

(11) **EP 4 670 813 B1**
(45) Date of publication and mention of the grant of the patent: **19.08.2026**
(21) Application number: 25181894.4
(22) Date of filing: 10.06.2025
(51) Int. Cl.: B01D 27/00, B01D 29/13, B01D 36/00

(54) **FUEL WATER SEPARATOR FILTER WITH WATER COLLECTION FEATURES**
KRAFTSTOFFWASSERABSCHEIDERFILTER MIT WASSERSAMMELMERKMALEN
FILTRE SÉPARATEUR D'EAU COMBUSTIBLE À CARACTÉRISTIQUES DE COLLECTE D'EAU

(30) Priority: 27.06.2024 US 202463664855 P
(43) Date of publication of application: 31.12.2025
(60) Divisional application: 26179812.8 / 4 775 288
(73) Proprietor: Baldwin Filters, Inc., Cleveland, OH 44124 (US)
(72) Inventor: ERICKSON, Brian K., Kearney, NE 68845 (US); SCHWEITZER, Stephen W., Kearney, NE 68845 (US)
(74) Representative: Murgitroyd & Company

(56) References cited:
- CN-A- 110 234 414
- DE-A1- 102015 003 162
- US-A- 5 922 199
- US-A1- 2005 150 825

## Description

### FIELD OF THE INVENTION

This invention generally relates to filters and more particular to fuel filters with multiple stages of filtration.

### BACKGROUND OF THE INVENTION

Fuel filters with multiple filter stages are known, such as described in U.S. Patents assigned to Parker-Hannifin Corporation, U.S. Patent Nos. 5,458,767 entitled *"Fuel filter assembly with dual filter media and by-pass device";* and 6,174,438 entitled *"Dual pass fuel filter assembly and element therefor*".

U.S. Patent No. 9,333,448 assigned to Mahle Int GMBH and entitled *"Filter Device"* discloses a fuel filter for separation of water and contaminants from fuel and includes ring filter element arranged in a filter housing in an upright manner. The ring filter element has an upper end disc and a lower end disc. A dirt pot has a water separator arranged therein and be provided on the lower end disc. The dirt pot also has a protruding pin. The filter housing has a channel configured to receive the pin. The filter device is operational when the pin engages into the channel.

US 2013/0327699 assigned to Mahle Int GMBH and entitled "Fuel Filter" discloses a fuel filter that includes a housing having a first annular filter element and a second annular filter element. The filter elements may be arranged coaxially and offset to each other in the axial direction and may be connected in series and therefore configured to allow flow to pass through each in succession. The annular filter elements may be selectively replaceable.

However, in both the '448 and '699 patent publications, plumbing complexities and/or additional structures such as a bottom structure on the filter (e.g., referred to as a "dirt pot" in the '448 patent) are required. As will be appreciated by the present disclosure, improvements and/or features over the state of the art are provided.

The following documents may also provide technical background to this disclosure: DE102015003162 A1; CN110234414 A; US5922199 A; and US2005/150825 A1.

### BRIEF SUMMARY OF THE INVENTION

Fuel filter embodiments herein may better prevent re-entrainment of water droplets into the fuel stream and/or may reduce the total number of required pieces to create a quiet zone for water stripped from fuel to collect and be transferred and drained as needed by application, and/or that may actuate a drain port within the filter housing in some embodiments.

In accordance with an inventive aspect of the present invention, a fuel filter is provided as defined in appended claim 1

One more of the features in any one or more of the of the following paragraphs may be used in alone or combination with this inventive aspect.

It is a feature that the annular shroud may cover at least 20 % of the axial span of the ring of filter media, and most preferably between 25% and 35 % of the axial span of the ring of filter media.

It is a feature that the annular shroud region is less perforate than the perforate region for causing in use fuel velocity to be lower proximate the lower end and the annular shroud region as compared to the perforate region. In this manner, the annular shroud region prevents water that gravitationally migrates into the water collection sump from re-emulsifying into fuel flow.

In the above feature and/or inventive aspect that the annular shroud region is preferably provided by an imperforate ring portion.

It is a feature that the water collection sump may comprise an annular cavity extending between the annular shroud region and a lower portion of the second tube portion.

It is a feature that the first tube portion may be an outer tube portion arranged along an inner periphery of the ring of filter media and the second tube portion may be an inner tube portion radially inside of the outer tube portion. This can provide for radially inward flow of fuel through the fuel filter.

In a more detailed embodiment, it is a feature that the support assembly may comprise the following component parts bonded together: (a) an upper end cap providing the upper end wall portion; (b) a lower end cap providing the lower end wall portion; (c) a first tube component providing most or all of the first tube portion; and (d) a second tube component providing most or all of the second tube portion.

In the above feature of a more detailed embodiment, the lower end cap may comprise a central opening through the lower end wall portion. The fuel filter yet may further comprise an annular lip extending below the lower end wall portion that supports a first annular seal below the lower end wall portion. Further, the second tube portion may support a second annular seal in spaced relation to the first annular seal.

In the above feature of a more detailed embodiment, the upper end cap may further define a receptacle supporting an annular post seal. Further, the upper end cap may be a closed end cap other than a vent orifice defined therein above the annular seal.

In the above feature of a more detailed embodiment, the lower end cap may further feature a drain plug with a seal, with the drain plug depending from the lower end wall portion.

It is a sealing feature that the fuel filter may comprise a first annular seal and a second annular seal in axial spaced relation, with the first tube portion carrying the first annular seal, and the second tube portion carrying the second annular seal.

In the above sealing feature, the first annular seal may be disposed below the lower end wall portion and the second annular seal may be disposed above the lower end wall portion, with the water collection sump extending between the annular shroud region and the second tube portion for capturing water in a region above both of the first annular seal and the second annular seal.

In the aforementioned sealing feature, the second tube portion may include a solid ring portion that extends axially above the lower end of the ring of filter media. Further, the second tube portion may comprise a perforated section extending from the solid ring portion toward the upper end wall portion, with the solid ring portion carrying a gasket providing the second annular seal.

In the above feature, preferably the annular shroud region extends axially higher than solid ring portion.

It is a feature according to a more detailed embodiment that the support assembly comprises the following component parts bonded together: (a) an upper end cap providing the upper end wall portion; (b) a lower end cap providing the lower end wall portion; and (c) a first tube component providing the first tube portion that has an upper half bonded to the upper end cap and a lower half bonded to the lower end cap.

In the above feature according to a more detailed embodiment, the annular shroud region can provide that the upper half is more porous than the lower half. This can create lower fluid velocities proximate the water collection sump.

It is a feature that second tube portion comprises an elongated cage defining a plurality of windows and the water stripper media comprises a filtration mesh overlapping the windows.

The fuel filter may be provided in combination with a fuel filter housing to provide a filtration assembly (and may seal with the annular seals of the aforementioned sealing feature). In such filtration assembly, the fuel filter housing may comprise a housing assembly including (a) a dirty fuel inlet; (b) a clean fuel outlet; and (c) a water drain. For example, the housing assembly may comprise: a bowl; a cap adapted to fasten to the bowl to providing a filter chamber receiving the fuel filter; and a standpipe, extending up centrally in the bowl and communicating the clean fuel outlet and the water drain, with the fuel filter positioned over the standpipe and engaging with the first annular seal and the second annular seal.

In the above filtration assembly combination, the standpipe may define a clean fuel port for the clean fuel outlet above each of the first and second annular seals. Further, the standpipe may define a separated water intake port for the water drain that is interposed between the first annular seal and the second annular seal.

In the aforementioned filtration assembly combination, the housing assembly may further comprise an unfiltered fuel drain in a bottom region of the bowl, with the support assembly of the fuel filter further comprising a drain plug that plugs the unfiltered fuel drain when mounted in the bowl on the standpipe.

It is a further feature that the fuel filter may comprise a drain plug depending from the lower end wall portion in one embodiment, or alternatively the fuel filter may feature a drain plug depending from the first tube portion in another embodiment.

Different filter medias may be used in the fuel filters of the inventive aspects. For example, wet-laid combination of synthetic, cellulose and/or glass fibers can be used for a first stage of filtration. A media that prevents passage of water droplet for a second stage filtration is also used, for example a mesh material.

For use a fuel filter, it is a feature that the ring of filter media comprises a non-woven fiber entanglement; wherein the non-woven fiber entanglement has at least an efficiency in a range from Beta75 = 4µ to 30µ per ISO 19438 and more preferably Beta75 = 4µ to 10µ.

For use as a fuel filter that effectively removes water, it is a feature that the water stripper media comprises a water stripping mesh having a variable pore size with permeability ranging from 1000 to 2000 mils, and more preferably 1000 to 1400 mils.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a side elevation view of a filter element according to an embodiment of the present invention;
FIG. 2 is cross-sectional view of the filter element of FIG. 1, taken along a vertical plane coincident with the central axis of the filter element;
FIG. 3 is an exploded assembly view of structural components of the filter element shown in FIGS. 1-2, shown in cross section;
FIG. 4 is a cross-section of a filter system including the filter element of the previous figures that is mounted into a filter housing;
FIG. 5 is an enlarged view of the lower portion of the cross-section view of FIG.2;
FIG. 6 is a partly schematic operational view of the filter system shown in FIG. 4, taken from a different plane to show porting of different liquid portions;
FIGS. 7-11 are different views of the pleated filter media tube used in the filter element of the previous figures, with FIGS. 7-8 being end views, FIG. 9 a side elevation view, FIG. 10 a vertical cross-section view coincident with the central axis, and FIG. 11 a perspective lower end view;
FIG. 12 is a cross sectional view of an alternative embodiment of a filter element that is the same as FIG. 2, except that the drain plug is integrally provided on the pleated filter media tube instead of the lower end cap;
FIG. 13 is a cross sectional view of another alternative embodiment of a filter element that is the same as FIG. 2, except that the drain plug is integrally provided on the pleated filter media tube instead of the lower end cap and as an elbow configuration part of a two-piece assembly;
FIG. 14 is an exploded assembly view of the two-piece assembly for the pleated filter media tube of FIG. 13.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

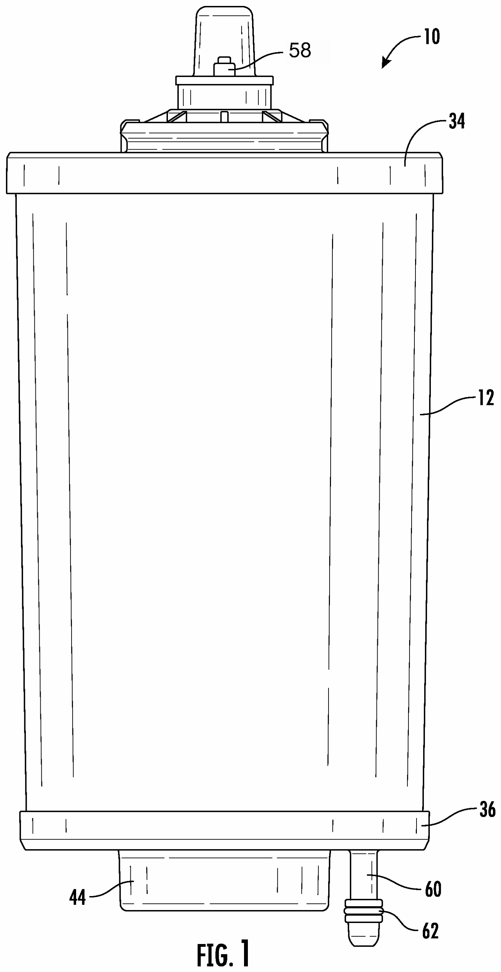

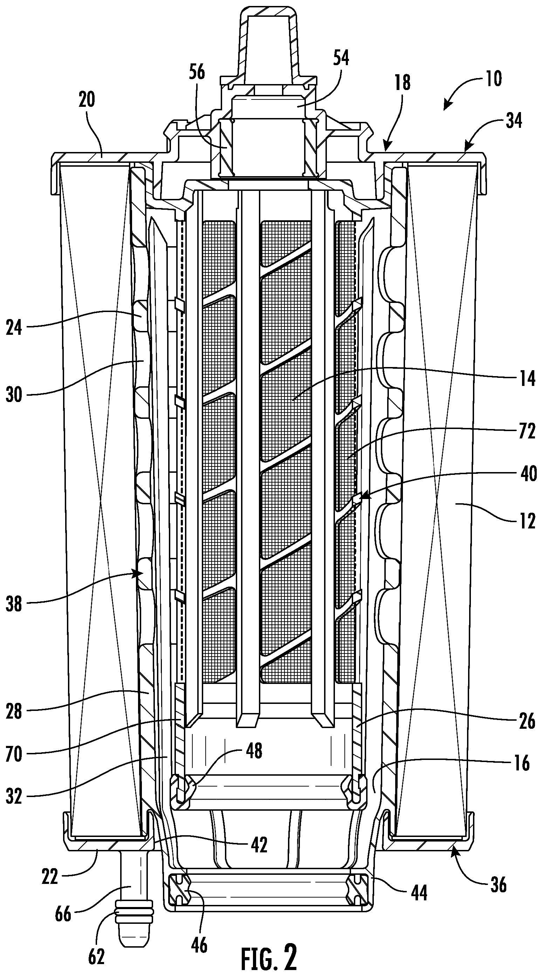

Referring to FIGS. 1-3, an embodiment of the present invention has been illustrated as a fuel filter 10. The fuel filter 10 comprises two-stages of filtration for separating both particulates and water out of a fuel flow. The fuel filter 10 includes a ring 12 of filter media having an upper end and a lower end; and a water stripper media 14.

For example, the ring 12 of filter media may be a pleated filter media ring as shown. For example, the water stripper media 14 may be tubular arrangement of fine mesh.

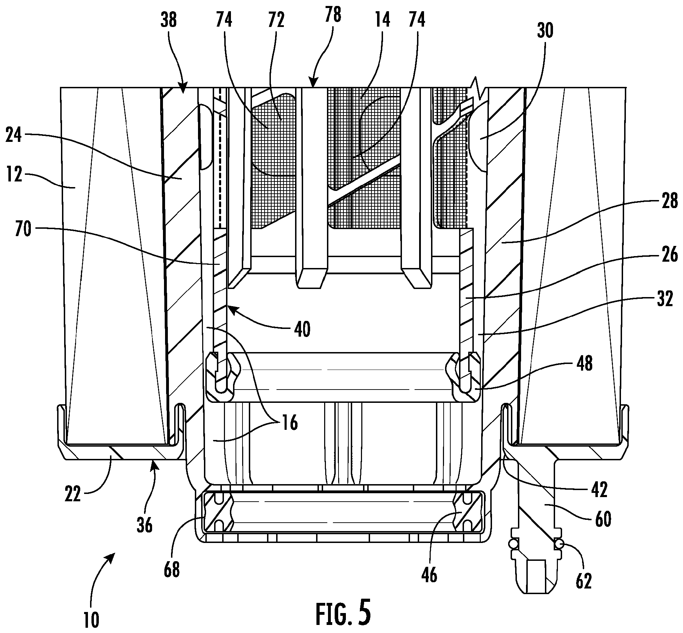

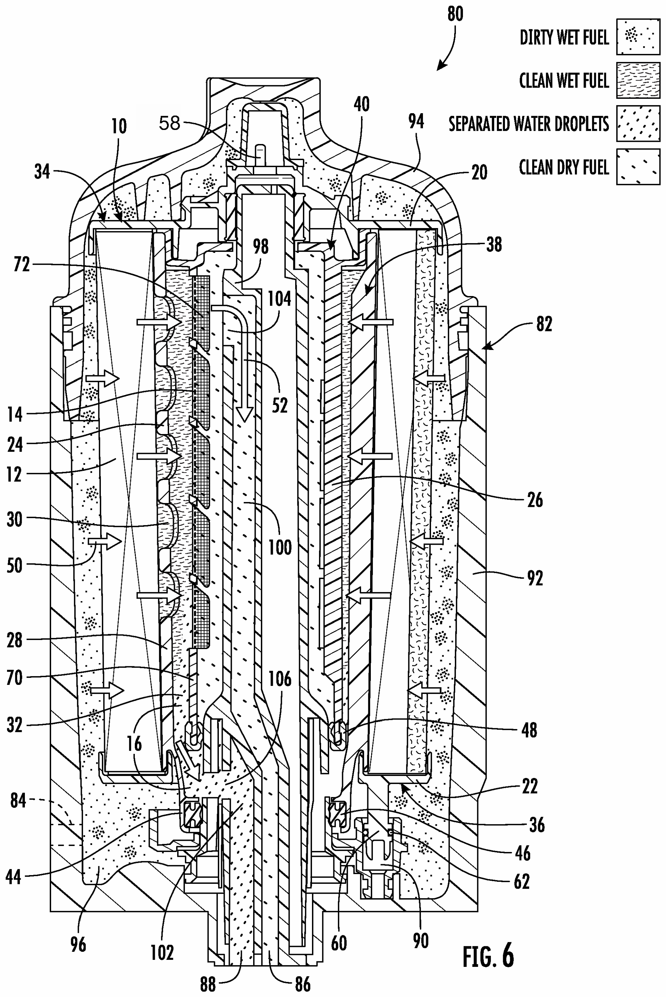

In operation (and with additional reference to FIG. 6 schematically showing liquid filtration/flows), unfiltered fuel that may carry particulates and/or emulsified water/water droplets will pass through the ring 12 of filter media which may also then tend to coalesce water droplets. The water stripper media 14 is operable to strip out and prevent passage of such water droplets. As water is typically heavier than most fuels, water gravitationally will migrate and/or settle in a water collection sump 16 provided by the fuel filter 10 (the sump being enlarged and shown in the lower portion view of FIG. 5).

For example, the ring 12 of filter media comprises a non-woven fiber entanglement that comprises a wet-laid combination of synthetic, cellulose and/or glass fibers; wherein the non-woven fiber entanglement has at least an efficiency in a range from Beta75 = 4µ to 30µ per ISO 19438 and more preferably Beta75 = 4µ to 10pu. Additionally, the ring 12 of filter media may have a silicone treatment to enhance performance.

For example, the water stripper media 14 may be a water stripping mesh as shown, and may have a variable pore size with permeability ranging from 1000 to 2000 mils, and more preferably 1000 to 1400 mils. Such water stripping mesh may be formed of a hydrophobic material or have hydrophobic treatment such as a wet chemical and/or plasma treatment process to better prevent passage of water droplets and to screen those for retention on the upstream side thereof.

To support and arrange the ring 12 of filter media and the water stripper media 14, a support assembly 18 which comprises various structural components assembled together that collectively can comprise (a) upper end wall portion 20 connected to the upper end of the ring 12 of filter media; (b) a lower end wall portion 22 connected to the lower end of the ring 12 of filter media; (c) a first tube portion positioned along the ring 12 of filter media; and (d) second tube portion 26 radially spaced from the first tube portion and along the water stripper media 14.

The first tube portion 24 extends between the upper end wall portion 20 and the lower end wall portion 22 and in this embodiment arranged along the inner periphery of the ring 12 of filter media. The first tube portion 24 may extend entirely between end wall portions 20, 22 to support the ring 12 of filter media against fluid pressure exerted by unfiltered fuel flow along the outside thereof.

The second tube portion 26 supports the water stripper media 14 such as having the water stripper media 14 embedded therein or by the water stripper media 14 being bonded to the inner or outer periphery thereof.

The support assembly 18 is arranged such as to create a quieter velocity zone and/or wall about the water collection sump 16 for causing in use fuel velocity to be lower proximate the lower end wall portion 22 and prevent water that gravitationally migrates into the water collection sump from re-emulsifying into fuel flow.

To provide for a quitter zone and/or a more sizeable water collection sump, in the embodiment shown, the first tube portion 24 includes an annular shroud region 28 extending from the lower end wall portion 22. A perforate region 30 extends above the annular shroud region 28 toward the upper end wall portion 20. The water collection sump 16 is delimited by the annular shroud region 28, and optionally may also be delimited in part by the second tube portion 28 as shown.

The perforate region 30 allows fuel to flow through past/through first tube portion 24 and around/above the shroud and thereby comprises at least one opening that may be provided in various ways such as an annular void region above the annular shroud region 28, or at least one and typically multiple openings defined through a tube wall portion as shown, or a combination thereof. The perforate region 30 may be formed by one component part or by multiple component parts. In any of these embodiments (an annular void, single opening or multiple openings), the first tube portion 24 extends between the upper end wall portion 20 and the lower end wall portion 22 and is arranged along the ring 12 of filter media; and the first tube portion includes: (i) the annular shroud region 28 extending from the lower end wall portion 22, with (ii) the perforate region 30 extending above the annular shroud region 28 toward the upper end wall portion 20. Stated another way, in any of these embodiments (an annular void, single opening or multiple openings), the first tube portion 24 provides for the perforate region 30.

In the arrangement shown, the annular shroud region 28 extends above the lower end wall portion 22 and covers a lower region of the ring 12 of filter media. For example, for best improvements in water separation and to prevent re-emulsifying, the annular shroud preferably covers at least 15% of an axial span of the ring 12 of filter media, more preferably at least 20 % of the axial span of the ring 12 of filter media, and most preferably between 25% and 35 % of the axial span of the ring 12 of filter media.

The annular shroud region 28 typically should be less perforate than the perforate region 30 for causing in use fuel velocity to be lower proximate the lower end wall portion 22 and at the lower end of the ring 12 of filter media, to prevent water that gravitationally migrates into the water collection sump 16 from re-emulsifying into fuel flow. While it is possible that the shroud may be porous and/or otherwise less perforate than the perforate region 30, the annular shroud region is preferably an imperforate ring portion as shown.

In an embodiment, the annular shroud region 28 provides that the upper half of the first tube portion 24 that is more porous than the lower half of the first tube portion 24. In this manner, lower velocities are experienced at the lower half as compared with the upper half during operational fuel flow through the fuel filter 10, and thereby water collected along the bottom half, for example in the vicinity of the gravitational bottom at the water collection sump 16 is less likely to become emulsified/re-entrained in the fuel flow.

With the arrangement of the support assembly 16, the water collection sump 16, comprises an annular cavity 32 extending between the annular shroud region 28 and a lower end portion of the second tube portion 26. The water collection sump 16 may also extend below the lower end portion of the second tube portion 26 as shown.

For outside-in-flow which is the preferred arrangement as embodied in the figures, the first tube portion 24 is an "outer" tube portion arranged along an inner periphery of the ring 12 of filter media and the second tube portion 26 is an "inner" tube portion radially inside of the outer tube portion 24. The first and second tube portions 24, 26 may be coaxially and concentric arranged relative to each other in radial spaced relation.

To provide for the various portions 20, 22, 24, 26 of the support assembly 18 in a convenient to assemble arrangement, the support assembly 18 is shown to comprise the following component parts bonded together: (a) an upper end cap 34 providing the upper end wall portion 20; (b) a lower end cap 36 providing the lower end wall portion 22; (c) a first tube part 38 providing most or all of the first tube portion 24; and (d) a second tube part 40 providing most or all of the second tube portion 26.

Also, these parts (caps 34,36 and tube parts 38, 40) can all preferably be formed from injection molded plastic material as shown via cross-hatch. Holes or windows may be integrally molded into the tube parts 38, 40 to provide for the perforate region 30 and the perforate section. Additionally, the opposed ends of the annular ring 12 of filter media can be sealed and bonded to the upper and lower end caps 34, 36 such as through potting or other adhesive attachment, or direct embed in which the plastic material of the end cap is softened and bonded directly to the ring 12 of filter media.

While the shroud region 28 may be an additional component in some embodiments (such as an additional cover/screen), advantageously the first tube part 38 can also unitarily provide the shroud region 28 as an integrally formed portion thereof without the need for an additional component. For example, this can be done via an imperforate ring portion molded directly into the lower end of the first tube part 38.

However, in additional embodiments of the present invention, different integral portions of the end caps 34, 36 could provide part of the various tube portions 24, 26. For example, the lower end cap 36 could have a higher inner annular posting wall that would be the annular shroud region 28 then of the first tube portion 24. And/or various portions of the tube parts 38, 40 can provide portions to the end wall portions 20, 22, 24, 26 of the support assembly 18. It is also not necessary for all components to be coupled together in the support assembly 18, for example, the second tube part 40 and water striper media 14 could be separate from the remainder of the fuel filter 10, but preferably all are coupled together to provide easier one-step installation and removal rather than a sequence. Fewer or more component parts may thereby provide for the various portions of the alternatives as discussed in the paragraph or otherwise are thereby encompassed by the appended broader claims such as the independent claims appended hereto.

Referring in greater detail to further features of the illustrated embodiment, the lower end cap 36 comprises a central opening 42 through the lower end wall portion 22 that as shown in FIG. 6 can facilitate separate flow paths for water drainage and cleaned fuel flow.

The support assembly 18, can further comprise an annular lip 44 (for example, that may be provided integrally by the first tube part 38) extending below lower end wall portion 22 for supporting a first annular seal 46 below the lower end wall portion 22. Furthermore, the second tube portion 26 typically supports a second annular seal 48 in spaced relation to the first annular seal 46. The seals prevent leakage between the water collection sump 16, the unfiltered fuel chamber 50 and the filtered fuel chamber/passageway 52.

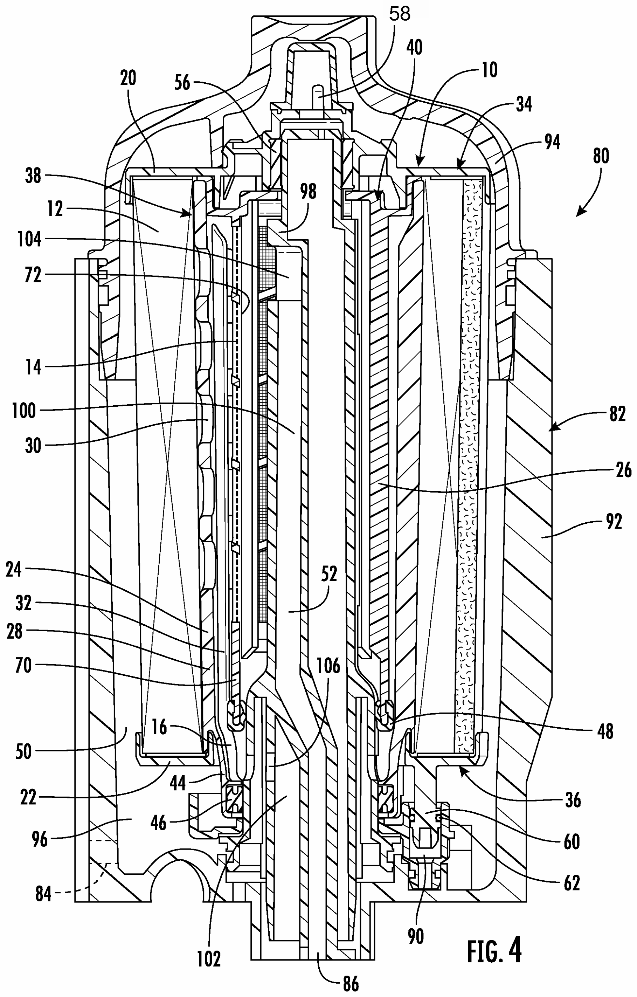

The upper end cap 34 may feature a receptacle 54 supporting an annular post seal 56 that can seal against the standpipe 98 (FIG. 4) . The upper end cap 34 is a closed end cap as illustrated other than an optional vent orifice 58 defined therein above the annular seal 56 that affords for easier install to relieve pressure during installation. Even with the vent orifice, the upper end cap 34 is still considered a closed end cap as fluid does not readily flow therethrough during operation, whereas the lower end cap 36 is considered an open end cap as fluid does readily flow therethrough during operation.

At the lower end, the lower end cap 36 may feature a drain plug 60 supporting an O-ring seal 62, in which the drain plug 60 depends from the lower end wall portion 22, of the lower end cap 36 in this embodiment.

As shown, the fuel filter 10 features a sealing arrangement that is preferably for the water collection sump 16.

For example, the sealing arrangement may comprise the first annular seal 46 and the second annular seal 48 in axial spaced relation in the vicinity of the collection sump 16; with the first tube portion 24 carrying the first annular seal 46, and the second tube portion 26 carrying the second annular seal 48.

For example, the seals 46, 48 can be provided by elastomeric O-ring gaskets as shown and can be carried by different means including mechanical retention (e.g. tongue/groove retention) and/or bonding agent. For example, the first annular seal 46 is resiliently snapped into a ribbed retaining groove 68 provided along the end tip portion of the first tube part 38, and the second annular seal 48 is slitted with a groove and tightly fit or even snap-fitted on the protruding end tip of the second tube part 40.

As shown, the first annular seal 46 is disposed below the lower end wall portion 22 and the second annular seal 48 is disposed above the lower end wall portion 22. As shown in installed use, these seals 46, 48 are operable for sealing the water collection sump 16.

In the embodiment shown, the water collection sump 16 can be thereby considered in the fuel filter 10 as extending between the annular shroud region 28 and the second tube portion 26 for capturing water in a region above both of the first and second annular seals 46, 48.

In the vicinity of the water collection sump 16, the second tube portion 26 (e.g. provided by the second tube part 40) may also include a solid ring portion 70 that extends axially above the lower end of the ring 12 of filter media (e.g., above the top of the lower end wall portion 22 of lower end cap 36). This solid ring portion 70 can be impermeable, whereas the second tube portion 26 can further comprise a perforated section 70 extending from the solid ring portion 70 toward the upper end wall portion 20. The solid ring portion 70 can carry a ring gasket providing the second annular seal 48.

In such arrangement and as shown, the annular shroud region 28 extends axially higher than solid ring portion 70, as its location to the pleated annular ring 12 of filter media is more important to blocking flow, however, the walling provided by the solid ring portion 70 also assists to keep liquid flow velocities low in the vicinity of the water collection sump.

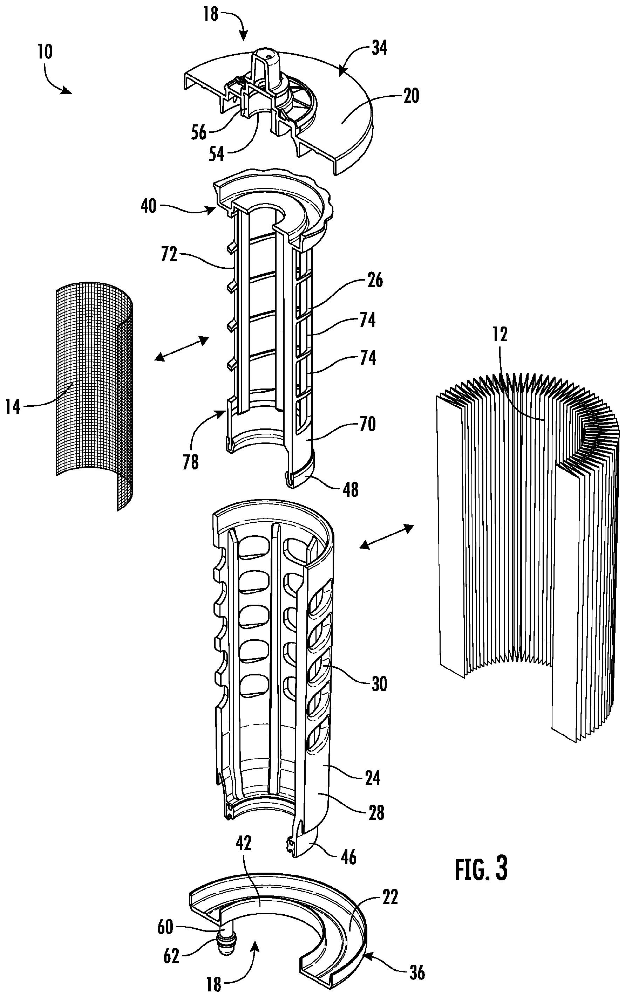

For example, the second tube portion 26 and second tube part 40 can comprise and be in the form of an elongated cage 78 best shown in FIG. 3, defining a plurality of windows 74 for the perforated section 72. The water stripper media 14 can comprise a filtration mesh 76 overlapping the windows (e.g., the filtration mesh may overlay the upstream or downstream side of the cage 78 or may more preferably be embedded such as during a plastic injection process directly into the plastic material of the cage 78).

The fuel filter 10 is usable in a filter system depicted in FIGS. 4 and 6 as a filtration assembly 80 that further comprises a fuel filter housing 82. The fuel filter housing 82 provides (a) a dirty fuel inlet 84 (for receiving fuel from the fuel tank supply); (b) a clean fuel outlet (for delivering filtered fuel toward the engine); (c) a water drain (that may be to a water sump and/or drain valve and can allow water to be periodically drained), and (d) preferably an unfiltered fuel drain (for draining the filter housing 82 returning fuel to the filter tank such as during servicing and to avoid fuel spilling during filter replacement).

For example, the filter housing 82 may be provided by a housing assembly comprising a bowl 92, a cap 94 adapted to fasten to the bowl 92 to provide an internal filter chamber 96 receiving the fuel filter 10; and a standpipe 98 extending up centrally in the bowl 92 and into the filter chamber 96.

The standpipe 98 includes internal passageways 100, 102 for the clean fuel outlet 86 and the water drain 88, respectively, as shown. The fuel filter 10 is positioned over the standpipe 98 and engages with the first and second annular seals 46, 48.

The standpipe 98 defines a clean fuel intake port 104 connected to the clean fuel passageway 100 and to the clean fuel outlet 86, with the clean fuel intake port 104 above each of the first and second annular seals 46, 48, and preferably higher up, for example in the upper half and even more preferably upper quarter region of the pleated annular ring 12 of filter media. The standpipe 98 also defines a separated water intake port 106 connected to the water passageway 102 leading to the water drain 88, in which water intake port 106 is at a position interposed between the first and second annular seals 46, 48.

Finally, the support assembly 18 comprises the drain plug 60 that plugs the unfiltered fuel drain 90 when the fuel filter 10 is mounted in the bowl 92 on the standpipe 98 with the cap 94 fully closed such as by fully threading the cap on the bowl.

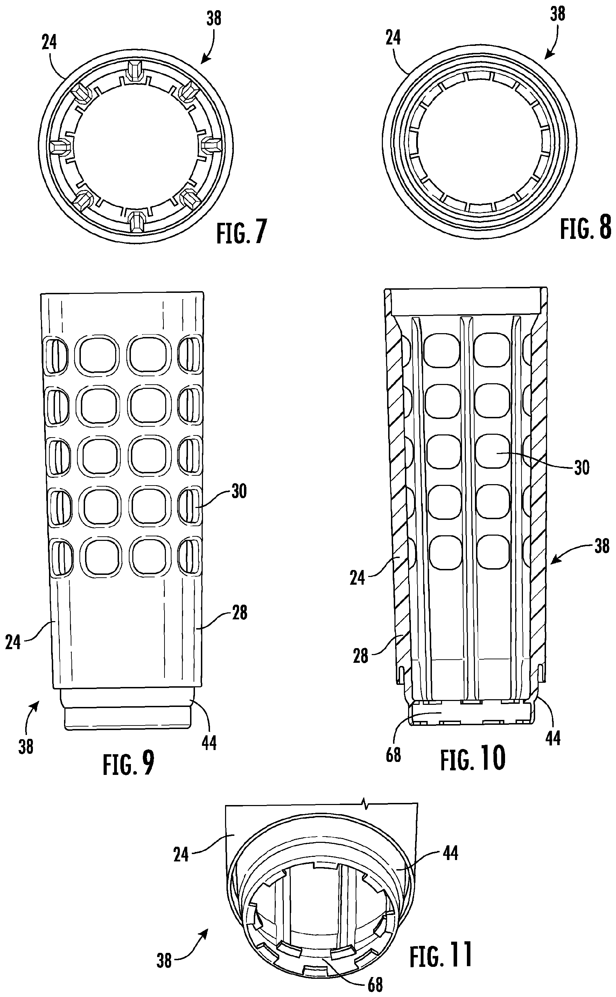

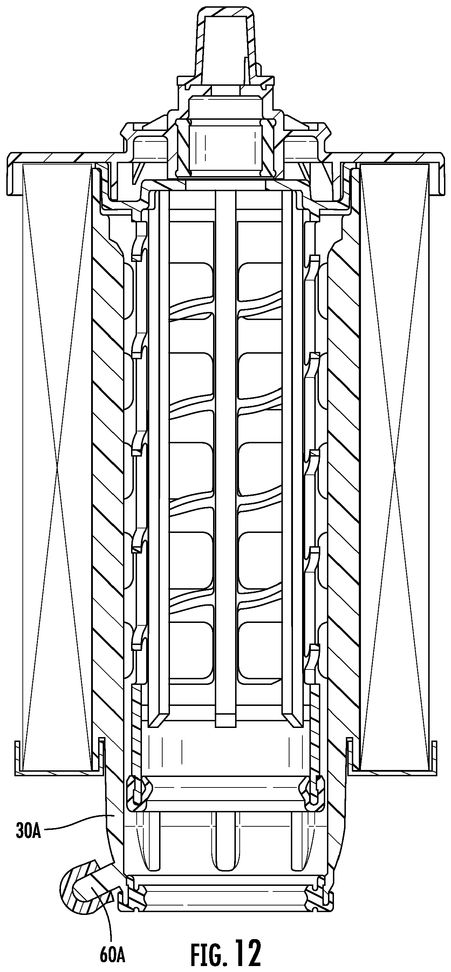

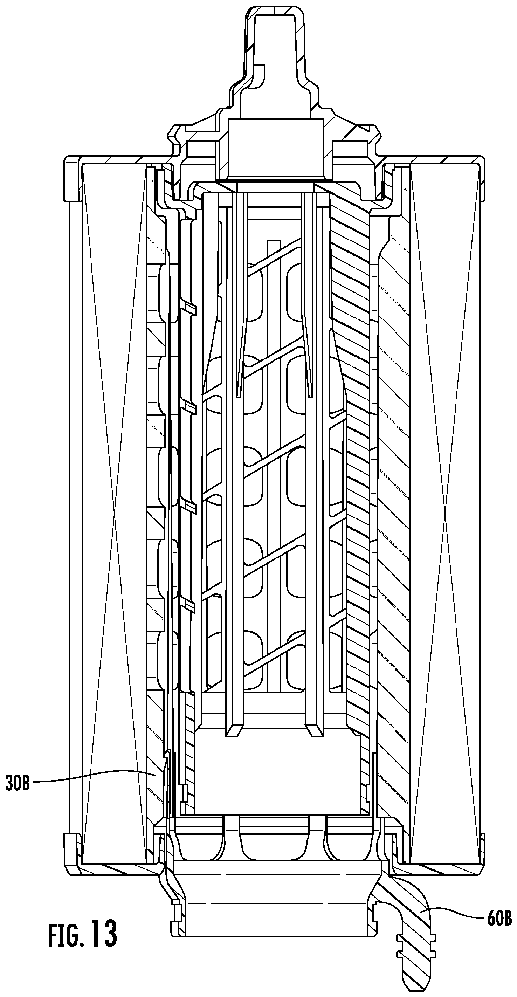

As shown in FIGS. 1-11, the drain plug 60 depends from the lower end wall portion 20 and can be an integral and unitarily formed portion of the lower end cap 36. However, other embodiments are shown in FIGS. 12-14, with different drain plugs 60A, 60B shown as part of the first tube part 38 rather than as part of the lower end cap 36. For example, in FIG. 12 an angled drain plug 60A is shown depending from the first tube part 38A, that would fit in an angled drain (not shown), whereas an elbow drain plug 60 depending from the first tube part 38B would fit and plug the same unfiltered fuel drain 90 in the fuel filter housing 82.

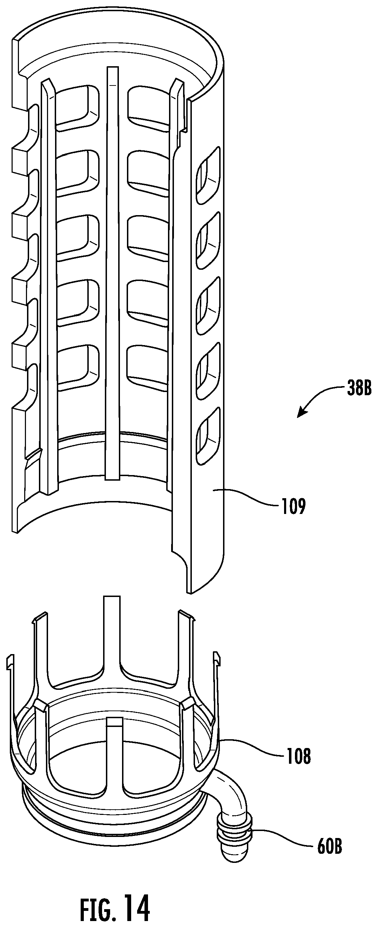

As also shown in FIG. 14, the first tube part 38B may actually be an assembly such as a snap fit as between two first tube sub-parts 108, 109.

Other than these differences in the two above paragraphs, the features, teachings and disclosure of FIGS. 1-11 are fully applicable to that of FIGS. 12-14 and only these differences differentiate these different illustrated embodiments.

## Claims

1. A fuel filter (10), comprising:
a ring of filter media (12) having an upper end and a lower end;
a support assembly (18), comprising:
(a) upper end wall portion (20) connected to the upper end,
(b) a lower end wall portion (22) connected to the lower end,
(c) a first tube portion (24), the first tube portion (24) extending between the upper end wall portion (20) and the lower end wall portion (20) and arranged along the ring of filter media (12), wherein the first tube portion (24) includes:(i) an annular shroud region (28) extending from the lower end wall portion (22), wherein the annular shroud region (28) extends above the lower end wall portion (22) and covers a lower region of the ring of filter media (12), and wherein the annular shroud region (28) covers at least 15% of an axial span of the ring of filter media (12), with (ii) a perforate region (30) arranged above the annular shroud region (28) toward the upper end wall portion (20);
(d) a second tube portion (26) radially spaced from the first tube portion (24), the second tube portion (26) supporting a water stripper media (14); and
a water collection sump (16) delimited by the annular shroud region (28).

2. The fuel filter (10) of claim 1, wherein the annular shroud (28) covers at least 20 % of the axial span of the ring of filter media (12), and most preferably between 25% and 35 % of the axial span of the ring of filter media (12).

3. The fuel filter (10) of claim 1 or claim 2, wherein the annular shroud region (28) is less perforate than the perforate region (30) for causing in use fuel velocity to be lower proximate the lower end and the annular shroud region (28) as compared to the perforate region (30) and prevents water that gravitationally migrates into the water collection sump (16) from re-emulsifying into fuel flow, and wherein the annular shroud region (28) is preferably provided by an imperforate ring portion.

4. The fuel filter (10) of any preceding claim, wherein the water collection sump (16) comprises an annular cavity (32) extending between the annular shroud region (28) and a lower portion of the second tube portion (26).

5. The fuel filter (10) of any preceding claim, wherein the first tube portion (24) is an outer tube portion arranged along an inner periphery of the ring of filter media (12) and the second tube portion (26) is an inner tube portion radially inside of the outer tube portion (24).

6. The fuel filter (10) of any preceding claim, where the support assembly (18) comprises the following component parts bonded together: (a) an upper end cap (34) providing the upper end wall portion (20); (b) a lower end cap (36) providing the lower end wall portion (22); (c) a first tube component (38) providing most or all of the first tube portion (24); and (d) a second tube component (40) providing most or all of the second tube portion (26).

7. The fuel filter (10) of claim 6, wherein the lower end cap (36) comprises a central opening (42) through the lower end wall portion (22), and further comprising an annular lip (44) extending below the lower end wall portion (22) supporting a first annular seal (46) below the lower end wall portion (22), and wherein the second tube portion (40) supports a second annular seal (48) in spaced relation to the first annular seal (46).

8. The fuel filter (10) of claim 6, wherein the upper end cap (34) defines a receptacle (54) supporting an annular post seal (56), and wherein the upper end cap (34) is a closed end cap other than a vent orifice (58) defined therein above the annular seal (56); and/or wherein the lower end cap (36) has a drain plug (60) with a seal (62), the drain plug (60) depending from the lower end wall portion (22).

9. The fuel filter (10) of claim 1, further comprising a first annular seal (46) and a second annular seal (48) in axial spaced relation, the first tube portion (24) carrying the first annular seal (46), the second tube portion (26) carrying the second annular seal (48).

10. The fuel filter (10) of claim 9, wherein the first annular seal (46) is disposed below the lower end wall portion (22) and the second annular seal (48) is disposed above the lower end wall portion (22), with the water collection sump (16) extending between the annular shroud region (28) and the second tube portion (26) for capturing water in a region above both of the first annular seal (46) and the second annular seal (48).

11. The fuel filter (10) of claim 9 or claim 10, wherein the second tube portion (26) includes a solid ring portion (70) that extends axially above the lower end of the ring of filter media (12), and wherein the second tube portion (26) further comprise a perforated section (72) extending from the solid ring portion (70) toward the upper end wall portion (20), the solid ring portion (70) carrying a gasket providing the second annular seal (48), and optionally wherein the annular shroud region (28) extends axially higher than solid ring portion (70).

12. The fuel filter (10) of any preceding claim, wherein the support assembly (18) comprises the following component parts bonded together: (a) an upper end cap (34) providing the upper end wall portion (20); (b) a lower end cap (36) providing the lower end wall portion (22); (c) a first tube component (38) providing the first tube portion (24) that has an upper half bonded to the upper end cap (34) and a lower half bonded to the lower end cap (36), wherein the annular shroud region (28) provides that the upper half is more porous than the lower half.

13. The fuel filter (10) of any preceding claim, wherein second tube portion (26) comprises an elongated cage (78) defining a plurality of windows (74) and the water stripper media (14) comprises a filtration mesh (76) overlapping the windows (74).

14. A filtration assembly (80) including the fuel filter (10) of claim 9, further comprising a fuel filter housing (82), the fuel filter housing (82) comprising:
a housing assembly including (a) a dirty fuel inlet (84); (b) a clean fuel outlet (86); and (c) a water drain (88), the housing assembly comprising:
a bowl (92);
a cap (94) adapted to fasten to the bowl (92) to providing a filter chamber (96) receiving the fuel filter (10); and
and a standpipe (98), extending up centrally in the bowl (92) and communicating the clean fuel outlet (86) and the water drain (88), the fuel filter (10) positioned over the standpipe (98) and engaging with the first annular seal (46) and the second annular seal (48).

15. The filtration assembly (80) of claim 14, wherein the standpipe (98) defines a clean fuel port (104) for the clean fuel outlet (86) above each of the first and second annular seals (46, 48), and wherein the standpipe (98) defines a separated water intake port (106) for the water drain (88) that is interposed between the first annular seal (46) and the second annular seal (48),
optionally wherein the housing assembly further comprises an unfiltered fuel drain (90) in a bottom region of the bowl (92), the support assembly (18) further comprising a drain plug (60, 60A, 60B) that plugs the unfiltered fuel drain (90) when mounted in the bowl (92) on the standpipe (98).

## Patentansprüche

1. Ein Kraftstofffilter (10), beinhaltend:
einen Ring aus Filtermedium (12), der ein oberes Ende und ein unteres Ende aufweist;
eine Stützanordnung (18), die Folgendes beinhaltet:
(a) einen oberen Endwandabschnitt (20), der mit dem oberen Ende gekoppelt ist,
(b) einen unteren Endwandabschnitt (22), der mit dem unteren Ende gekoppelt ist,
(c) einen ersten Rohrabschnitt (24), wobei sich der erste Rohrabschnitt (24) zwischen dem oberen Endwandabschnitt (20) und dem unteren Endwandabschnitt (20) erstreckt und entlang des Rings aus Filtermedium (12) angeordnet ist, wobei der erste Rohrabschnitt (24) Folgendes umfasst: (i) einen ringförmigen Ummantelungsbereich (28), der sich von dem unteren Endwandabschnitt (22) erstreckt, wobei sich der ringförmige Ummantelungsbereich (28) über dem unteren Endwandabschnitt (22) erstreckt und einen unteren Bereich des Rings aus Filtermedium (12) abdeckt, und wobei der ringförmige Ummantelungsbereich (28) mindestens 15 % einer axialen Spanne des Rings aus Filtermedium (12) abdeckt, wobei (ii) ein perforierter Bereich (30) über dem ringförmigen Ummantelungsbereich (28) in Richtung des oberen Endwandabschnitts (20) angeordnet ist;
(d) einen zweiten Rohrabschnitt (26), der radial von dem ersten Rohrabschnitt (24) beabstandet ist, wobei der zweite Rohrabschnitt (26) ein Wasserabstreifermedium (14) stützt; und
einen Wassersammelsumpf (16), der durch den ringförmigen Ummantelungsbereich (28) begrenzt ist.

2. Kraftstofffilter (10) gemäß Anspruch 1, wobei die ringförmige Ummantelung (28) mindestens 20 % der axialen Spanne des Rings aus Filtermedium (12) und am meisten bevorzugt zwischen 25 % und 35 % der axialen Spanne des Rings aus Filtermedium (12) abdeckt.

3. Kraftstofffilter (10) gemäß Anspruch 1 oder Anspruch 2, wobei der ringförmige Ummantelungsbereich (28) weniger perforiert ist als der perforierte Bereich (30), um im Gebrauch zu bewirken, dass die Kraftstoffgeschwindigkeit in der Nähe des unteren Endes und des ringförmigen Ummantelungsbereichs (28) im Vergleich zu dem perforierten Bereich (30) geringer ist, und verhindert, dass Wasser, das schwerkraftbedingt in den Wassersammelsumpf (16) wandert, erneut in den Kraftstoffstrom emulgiert, und wobei der ringförmige Ummantelungsbereich (28) vorzugsweise durch einen unperforierten Ringabschnitt bereitgestellt wird.

4. Kraftstofffilter (10) gemäß einem vorhergehenden Anspruch, wobei der Wassersammelsumpf (16) einen ringförmigen Hohlraum (32) beinhaltet, der sich zwischen dem ringförmigen Ummantelungsbereich (28) und einem unteren Abschnitt des zweiten Rohrabschnitts (26) erstreckt.

5. Kraftstofffilter (10) gemäß einem vorhergehenden Anspruch, wobei der erste Rohrabschnitt (24) ein äußerer Rohrabschnitt ist, der entlang eines Innenumfangs des Rings aus Filtermedium (12) angeordnet ist, und der zweite Rohrabschnitt (26) ein innerer Rohrabschnitt ist, der sich radial innerhalb des äußeren Rohrabschnitts (24) befindet.

6. Kraftstofffilter (10) gemäß einem vorhergehenden Anspruch, wobei die Stützanordnung (18) die folgenden Komponententeile beinhaltet, die miteinander verbunden sind: (a) eine obere Endkappe (34), die den oberen Endwandabschnitt (20) bereitstellt; (b) eine untere Endkappe (36), die den unteren Endwandabschnitt (22) bereitstellt; (c) eine erste Rohrkomponente (38), die den größten Teil oder die Gesamtheit des ersten Rohrabschnitts (24) bereitstellt; und (d) eine zweite Rohrkomponente (40), die den größten Teil oder die Gesamtheit des zweiten Rohrabschnitts (26) bereitstellt.

7. Kraftstofffilter (10) gemäß Anspruch 6, wobei die untere Endkappe (36) eine zentrale Öffnung (42) durch den unteren Endwandabschnitt (22) beinhaltet, und ferner beinhaltend eine ringförmige Lippe (44), die sich unter dem unteren Endwandabschnitt (22) erstreckt und eine erste ringförmige Dichtung (46) unter dem unteren Endwandabschnitt (22) stützt, und wobei der zweite Rohrabschnitt (40) eine zweite ringförmige Dichtung (48) in beabstandeter Beziehung zu der ersten ringförmigen Dichtung (46) stützt.

8. Kraftstofffilter (10) gemäß Anspruch 6, wobei die obere Endkappe (34) eine Aufnahme (54) definiert, die eine ringförmige Pfostendichtung (56) stützt, und wobei die obere Endkappe (34) eine geschlossene Endkappe ist, abgesehen von einer Entlüftungsöffnung (58), die darin über der ringförmigen Dichtung (56) definiert ist; und/oder
wobei die untere Endkappe (36) einen Ablaufstopfen (60) mit einer Dichtung (62) aufweist, wobei der Ablaufstopfen (60) von dem unteren Endwandabschnitt (22) herabhängt.

9. Kraftstofffilter (10) gemäß Anspruch 1, ferner beinhaltend eine erste ringförmige Dichtung (46) und eine zweite ringförmige Dichtung (48) in axial beabstandeter Beziehung, wobei der erste Rohrabschnitt (24) die erste ringförmige Dichtung (46) trägt, wobei der zweite Rohrabschnitt (26) die zweite ringförmige Dichtung (48) trägt.

10. Kraftstofffilter (10) gemäß Anspruch 9, wobei die erste ringförmige Dichtung (46) unter dem unteren Endwandabschnitt (22) eingerichtet ist und die zweite ringförmige Dichtung (48) über dem unteren Endwandabschnitt (22) eingerichtet ist, wobei sich der Wassersammelsumpf (16) zum Auffangen von Wasser in einem Bereich über sowohl der ersten ringförmigen Dichtung (46) als auch der zweiten ringförmigen Dichtung (48) zwischen dem ringförmigen Ummantelungsbereich (28) und dem zweiten Rohrabschnitt (26) erstreckt.

11. Kraftstofffilter (10) gemäß Anspruch 9 oder Anspruch 10, wobei der zweite Rohrabschnitt (26) einen massiven Ringabschnitt (70) umfasst, der sich axial über dem unteren Ende des Rings aus Filtermedium (12) erstreckt, und wobei der zweite Rohrabschnitt (26) ferner einen perforierten Teilabschnitt (72) beinhaltet, der sich von dem massiven Ringabschnitt (70) in Richtung des oberen Endwandabschnitts (20) erstreckt, wobei der massive Ringabschnitt (70) einen Dichtring trägt, der die zweite ringförmige Dichtung (48) bereitstellt,
und wobei sich optional der ringförmige Ummantelungsbereich (28) axial höher als der massive Ringabschnitt (70) erstreckt.

12. Kraftstofffilter (10) gemäß einem vorhergehenden Anspruch, wobei die Stützanordnung (18) die folgenden miteinander verbundenen Komponententeile beinhaltet: (a) eine obere Endkappe (34), die den oberen Endwandabschnitt (20) bereitstellt; (b) eine untere Endkappe (36), die den unteren Endwandabschnitt (22) bereitstellt; (c) eine erste Rohrkomponente (38), die den ersten Rohrabschnitt (24) bereitstellt und eine obere Hälfte, die mit der oberen Endkappe (34) verbunden ist, und eine untere Hälfte, die mit der unteren Endkappe (36) verbunden ist, aufweist, wobei der ringförmige Ummantelungsbereich (28) dafür sorgt, dass die obere Hälfte poröser als die untere Hälfte ist.

13. Kraftstofffilter (10) gemäß einem vorhergehenden Anspruch, wobei der zweite Rohrabschnitt (26) einen länglichen Käfig (78) beinhaltet, der eine Vielzahl von Fenstern (74) definiert, und das Wasserabstreifermedium (14) ein Filtrationsnetz (76) beinhaltet, das die Fenster (74) überlappt.

14. Eine Filtrationsanordnung (80), die den Kraftstofffilter (10) gemäß Anspruch 9 umfasst, ferner beinhaltend ein Kraftstofffiltergehäuse (82), wobei das Kraftstofffiltergehäuse (82) Folgendes beinhaltet:
eine Gehäuseanordnung, umfassend (a) einen Einlass für schmutzigen Kraftstoff (84); (b) einen Auslass für sauberen Kraftstoff (86); und (c) einen Wasserablauf (88), wobei die Gehäuseanordnung Folgendes beinhaltet:
eine Wanne (92);
eine Kappe (94), die angepasst ist, um an der Wanne (92) befestigt zu werden, um eine Filterkammer (96) bereitzustellen, die den Kraftstofffilter (10) aufnimmt; und
und ein Standrohr (98), das sich zentral in der Wanne (92) nach oben erstreckt und den Auslass für sauberen Kraftstoff (86) und den Wasserablauf (88) in Verbindung setzt,
wobei der Kraftstofffilter (10) über dem Standrohr (98) positioniert ist und mit der ersten ringförmigen Dichtung (46) und der zweiten ringförmigen Dichtung (48) in Eingriff steht.

15. Filtrationsanordnung (80) gemäß Anspruch 14, wobei das Standrohr (98) einen Durchlass für sauberen Kraftstoff (104) für den Auslass für sauberen Kraftstoff (86) über jeder der ersten und der zweiten ringförmigen Dichtung (46, 48) definiert und wobei das Standrohr (98) einen separaten Wasseraufnahmedurchlass (106) für den Wasserablauf (88) definiert, der zwischen der ersten ringförmigen Dichtung (46) und der zweiten ringförmigen Dichtung (48) angeordnet ist,
wobei optional die Gehäuseanordnung ferner einen Ablauf für ungefilterten Kraftstoff (90) in einem Bodenbereich der Wanne (92) beinhaltet, wobei die Stützanordnung (18) ferner einen Ablaufstopfen (60, 60A, 60B) beinhaltet, der den Ablauf für ungefilterten Kraftstoff (90) verschließt, wenn er in der Wanne (92) an dem Standrohr (98) angebracht ist.

## Revendications

1. Un filtre à carburant (10), comprenant :
un anneau de milieu filtrant (12) ayant une extrémité supérieure et une extrémité inférieure ; un ensemble de support (18), comprenant :
(a) une partie formant paroi d'extrémité supérieure (20) raccordée à l'extrémité supérieure,
(b) une partie formant paroi d'extrémité inférieure (22) raccordée à l'extrémité inférieure,
(c) une première partie formant tube (24), la première partie formant tube (24) s'étendant entre la partie formant paroi d'extrémité supérieure (20) et la partie formant paroi d'extrémité inférieure (20) et étant agencée le long de l'anneau de milieu filtrant (12), dans laquelle la première partie formant tube (24) inclut : (i) une région d'enveloppe annulaire (28) s'étendant à partir de la partie formant paroi d'extrémité inférieure (22), dans laquelle la région d'enveloppe annulaire (28) s'étend au-dessus de la partie formant paroi d'extrémité inférieure (22) et recouvre une région inférieure de l'anneau de milieu filtrant (12), et dans laquelle la région d'enveloppe annulaire (28) recouvre au moins 15 % d'une étendue axiale de l'anneau de milieu filtrant (12), avec (ii) une région perforée (30) agencée au-dessus de la région d'enveloppe annulaire (28) vers la partie formant paroi d'extrémité supérieure (20) ;
(d) une deuxième partie formant tube (26) espacée radialement de la première partie formant tube (24), la deuxième partie formant tube (26) supportant un milieu de séparation d'eau (14) ; et
un puisard de collecte d'eau (16) délimité par la région d'enveloppe annulaire (28).

2. Le filtre à carburant (10) selon la revendication 1, dans lequel l'enveloppe annulaire (28) recouvre au moins 20 % de l'étendue axiale de l'anneau de milieu filtrant (12), et de manière plus préférée entre 25 % et 35 % de l'étendue axiale de l'anneau de milieu filtrant (12).

3. Le filtre à carburant (10) selon la revendication 1 ou la revendication 2, dans lequel la région d'enveloppe annulaire (28) est moins perforée que la région perforée (30) pour amener, lors de l'utilisation, la vitesse du carburant à être inférieure à proximité de l'extrémité inférieure et de la région d'enveloppe annulaire (28) par rapport à la région perforée (30) et empêche l'eau qui migre par gravité dans le puisard de collecte d'eau (16) de se ré-émulsifier dans l'écoulement de carburant, et dans lequel la région d'enveloppe annulaire (28) est de préférence fournie par une partie d'anneau non perforée.

4. Le filtre à carburant (10) selon l'une quelconque des revendications précédentes, dans lequel le puisard de collecte d'eau (16) comprend une cavité annulaire (32) s'étendant entre la région d'enveloppe annulaire (28) et une partie inférieure de la deuxième partie formant tube (26).

5. Le filtre à carburant (10) selon l'une quelconque des revendications précédentes, dans lequel la première partie formant tube (24) est une partie formant tube externe agencée le long d'une périphérie interne de l'anneau de milieu filtrant (12) et la deuxième partie formant tube (26) est une partie formant tube interne radialement à l'intérieur de la partie formant tube externe (24).

6. Le filtre à carburant (10) selon l'une quelconque des revendications précédentes, dans lequel l'ensemble de support (18) comprend les éléments constitutifs suivants liés ensemble : (a) un capuchon d'extrémité supérieure (34) fournissant la partie formant paroi d'extrémité supérieure (20) ; (b) un capuchon d'extrémité inférieure (36) fournissant la partie formant paroi d'extrémité inférieure (22) ; (c) un premier composant de tube (38) fournissant la majeure partie ou la totalité de la première partie formant tube (24) ; et (d) un deuxième composant de tube (40) fournissant la majeure partie ou la totalité de la deuxième partie formant tube (26).

7. Le filtre à carburant (10) selon la revendication 6, dans lequel le capuchon d'extrémité inférieure (36) comprend une ouverture centrale (42) à travers la partie formant paroi d'extrémité inférieure (22), et comprenant en outre une lèvre annulaire (44) s'étendant sous la partie formant paroi d'extrémité inférieure (22) supportant un premier joint d'étanchéité annulaire (46) sous la partie formant paroi d'extrémité inférieure (22), et dans lequel la deuxième partie formant tube (40) supporte un deuxième joint d'étanchéité annulaire (48) en relation espacée par rapport au premier joint d'étanchéité annulaire (46).

8. Le filtre à carburant (10) selon la revendication 6, dans lequel le capuchon d'extrémité supérieure (34) définit un réceptacle (54) supportant un joint d'étanchéité annulaire de montant (56), et dans lequel le capuchon d'extrémité supérieure (34) est un capuchon d'extrémité fermé autre qu'un orifice d'évent (58) défini dans celui-ci au-dessus du joint d'étanchéité annulaire (56) ; et/ou
dans lequel le capuchon d'extrémité inférieure (36) a un bouchon de vidange (60) avec un joint d'étanchéité (62), le bouchon de vidange (60) suspendu à la partie formant paroi d'extrémité inférieure (22).

9. Le filtre à carburant (10) selon la revendication 1, comprenant en outre un premier joint d'étanchéité annulaire (46) et un deuxième joint d'étanchéité annulaire (48) en relation espacée axiale, la première partie formant tube (24) portant le premier joint d'étanchéité annulaire (46), la deuxième partie formant tube (26) portant le deuxième joint d'étanchéité annulaire (48).

10. Le filtre à carburant (10) selon la revendication 9, dans lequel le premier joint d'étanchéité annulaire (46) est disposé sous la partie formant paroi d'extrémité inférieure (22) et le deuxième joint d'étanchéité annulaire (48) est disposé au-dessus de la partie formant paroi d'extrémité inférieure (22), le puisard de collecte d'eau (16) s'étendant entre la région d'enveloppe annulaire (28) et la deuxième partie formant tube (26) pour capturer l'eau dans une région au-dessus à la fois du premier joint d'étanchéité annulaire (46) et du deuxième joint d'étanchéité annulaire (48).

11. Le filtre à carburant (10) selon la revendication 9 ou la revendication 10, dans lequel la deuxième partie formant tube (26) inclut une partie formant anneau plein (70) qui s'étend axialement au-dessus de l'extrémité inférieure de l'anneau de milieu filtrant (12), et dans lequel la deuxième partie formant tube (26) comprend en outre une section perforée (72) s'étendant à partir de la partie formant anneau plein (70) vers la partie formant paroi d'extrémité supérieure (20), la partie formant anneau plein (70) portant une garniture fournissant le deuxième joint d'étanchéité annulaire (48),
et facultativement dans lequel la région d'enveloppe annulaire (28) s'étend axialement plus haut que la partie formant anneau plein (70).

12. Le filtre à carburant (10) selon l'une quelconque des revendications précédentes, dans lequel l'ensemble de support (18) comprend les éléments constitutifs suivants liés ensemble : (a) un capuchon d'extrémité supérieure (34) fournissant la partie formant paroi d'extrémité supérieure (20) ; (b) un capuchon d'extrémité inférieure (36) fournissant la partie formant paroi d'extrémité inférieure (22) ; (c) un premier composant de tube (38) fournissant la première partie formant tube (24) qui a une moitié supérieure liée au capuchon d'extrémité supérieure (34) et une moitié inférieure liée au capuchon d'extrémité inférieure (36), dans lequel la région d'enveloppe annulaire (28) prévoit que la moitié supérieure est plus poreuse que la moitié inférieure.

13. Le filtre à carburant (10) selon l'une quelconque des revendications précédentes, dans lequel la deuxième partie formant tube (26) comprend une cage allongée (78) définissant une pluralité de fenêtres (74) et le milieu de séparation d'eau (14) comprend une maille de filtration (76) chevauchant les fenêtres (74).

14. Un ensemble de filtration (80) incluant le filtre à carburant (10) selon la revendication 9, comprenant en outre un boîtier de filtre à carburant (82), le boîtier de filtre à carburant (82) comprenant :
un ensemble de boîtier incluant (a) une entrée de carburant sale (84) ; (b) une sortie de carburant propre (86) ; et (c) une purge d'eau (88), l'ensemble de boîtier comprenant :
une cuve (92) ;
un capuchon (94) adapté pour se fixer à la cuve (92) afin de fournir une chambre de filtre (96) recevant le filtre à carburant (10) ; et
et une colonne montante (98), s'étendant vers le haut de manière centrale dans la cuve (92) et faisant communiquer la sortie de carburant propre (86) et la purge d'eau (88), le filtre à carburant (10) étant positionné sur la colonne montante (98) et venant en prise avec le premier joint d'étanchéité annulaire (46) et le deuxième joint d'étanchéité annulaire (48).

15. L'ensemble de filtration (80) selon la revendication 14, dans lequel la colonne montante (98) définit un orifice de carburant propre (104) pour la sortie de carburant propre (86) au-dessus de chacun des premier et deuxième joints d'étanchéité annulaires (46, 48), et dans lequel la colonne montante (98) définit un orifice d'admission d'eau séparée (106) pour la purge d'eau (88) qui est interposé entre le premier joint d'étanchéité annulaire (46) et le deuxième joint d'étanchéité annulaire (48),
facultativement dans lequel l'ensemble de boîtier comprend en outre une purge de carburant non filtré (90) dans une région inférieure de la cuve (92), l'ensemble de support (18) comprenant en outre un bouchon de vidange (60, 60A, 60B) qui bouche la purge de carburant non filtré (90) lorsqu'il est monté dans la cuve (92) sur la colonne montante (98).
